# EUROPÄISCHE PATENTSCHRIFT

(11) **EP 2 140 124 B1**
(45) Veröffentlichungstag und Bekanntmachung des Hinweises auf die Patenterteilung: **15.04.2015**
(21) Anmeldenummer: 08701677.0
(22) Anmeldetag: 28.01.2008
(51) Int. Cl.: F02D 41/20, H01L 41/04

(54) **KRAFTSTOFFEINSPRITZSYSTEM UND VERFAHREN ZUM EINSPRITZEN VON KRAFTSTOFF**
FUEL INJECTION SYSTEM AND METHOD FOR INJECTING FUEL
SYSTÈME D'INJECTION DE CARBURANT ET PROCÉDÉ D'INJECTION DE CARBURANT

(30) Priorität: 27.03.2007 DE 10714502
(43) Veröffentlichungstag der Anmeldung: 06.01.2010
(73) Patentinhaber: Robert Bosch GmbH, 70442 Stuttgart (DE)
(72) Erfinder: KUHNERT, Christian, 71665 Vaihingen/Enz (DE); BARTSCH, Andreas, 70563 Stuttgart (DE); SENGEBUSCH, Falco, 70469 Stuttgart-Feuerbach (DE)
(86) Internationale Anmeldenummer: PCT/EP2008/050961
(87) Internationale Veröffentlichungsnummer: WO 2008/116679

(56) Entgegenhaltungen:
- EP-A- 1 628 010
- EP-A- 1 689 004
- DE-A1- 10 314 566
- DE-A1-102006 000 288
- GB-A- 2 334 164

## Beschreibung

Die Erfindung betrifft ein Kraftstoffeinspritzsystem mit mindestens einem Kraftstoffinjektor, der einen elektrisch betätigbaren Aktor umfasst. Die Erfindung betrifft des Weiteren ein Verfahren zum Einspritzen von Kraftstoff aus mindestens einem Kraftstoffinjektor, der einen elektrisch betätigbaren Aktor umfasst, an den eine Spannung angelegt wird.

### Stand der Technik

Der Kraftstoffinjektor dient dazu, Kraftstoff in einen Brennraum einer Brennkraftmaschine einzuspritzen. Vorzugsweise umfasst das Kraftstoffeinspritzsystem mehrere Kraftstoffinjektoren, die über ein Steuergerät angesteuert werden.

### Offenbarung der Erfindung

Aufgabe der Erfindung ist es, die hydraulischen Abstände zwischen zwei Einspritzungen zu reduzieren.

Die Aufgabe ist bei einem Kraftstoffeinspritzsystem mit mindestens einem Kraftstoffinjektor, der einen elektrisch betätigbaren Aktor umfasst, dadurch gelöst, dass eine spannungsglättende oder spannungsdämpfende elektrische Einrichtung parallel zu dem Aktor geschaltet ist. Bei einer Einspritzung wird eine Druckwelle in das Kraftstoffeinspritzsystem eingebracht. Dadurch wird eine hochfrequente Druckschwingung ausgelöst, die den mit Druck beaufschlagten Aktor zu Schwingungen anregt. Bei dem Aktor handelt es sich vorzugsweise um einen Piezoaktor, der mit Druck beaufschlagt ist und durch die hochfrequente Druckschwingung ebenfalls zu Schwingungen angeregt wird, so dass eine an dem Aktor anliegende Spannung schwankt. Die nachfolgende Einspritzung wird davon beeinflusst, in welchem Zustand sich der Aktor zu Beginn der Ansteuerung befindet. Die Druckwelle beeinflusst die Menge der nachfolgenden Einspritzung und ist Auslöser einer Mengenwelle, die aufgrund von Druckschwankungen entsteht und auf den Aktor wirkt. Als Mengenwelle wird der Verlauf der Menge über dem zeitlichen Abstand der Einspritzungen bezeichnet. Mit der erfindungsgemäß geschalteten spannungsglättenden oder spannungsdämpfenden elektrischen Einrichtung wird die Spannung, die an dem Aktor anliegt, geglättet, so dass die Mengenwelle ebenfalls geglättet oder gedämpft wird. Gemäß einem wesentlichen Aspekt der Erfindung wird über elektrische Schwingkreise ein Dämpfungskreis realisiert, durch den die Amplituden der Mengenwellen in dem Kraftstoffeinspritzsystem deutlich verringert werden können.

Erfindungsgemäß ist eine Schalteinrichtung mit der spannungsglättenden oder spannungsdämpfenden elektrischen Einrichtung in Reihe geschaltet. Die Schalteinrichtung dient dazu, die spannungsglättende oder spannungsdämpfende elektrische Einrichtung gezielt zu- beziehungsweise abzuschalten. Das liefert den Vorteil, dass die Glättung der Spannung nur zwischen zwei Ansteuerungen durchgeführt werden kann. Die Schalteinrichtung kann in ein Steuergerät integriert sein.

Ein bevorzugtes Ausführungsbeispiel des Kraftstoffeinspritzsystems ist dadurch gekennzeichnet, dass die spannungsglättende oder spannungsdämpfend elektrische Einrichtung einen Kondensator umfasst. Der Kondensator ermöglicht es, die Spannung, die an dem Aktor anliegt, zu puffern. Dadurch kann die Amplitude der Mengenwelle verkleinert beziehungsweise reduziert werden.

Ein weiteres bevorzugtes Ausführungsbeispiel des Kraftstoffeinspritzsystems ist dadurch gekennzeichnet, dass die spannungsglättende oder spannungsdämpfende elektrische Einrichtung einen Kondensator, eine Spule und/oder einen Widerstand umfasst. Besonders bevorzugt sind eine Spule und ein Widerstand, ein Widerstand und ein Kondensator oder eine Spule und ein Kondensator in einem Siebglied zusammengefasst.

Ein weiteres bevorzugtes Ausführungsbeispiel des Kraftstoffeinspritzsystems ist dadurch gekennzeichnet, dass ein Steuergerät parallel zu dem Aktor und der spannungsglättenden oder spannungsdämpfenden elektrischen Einrichtung geschaltet ist. Das Steuergerät dient dazu, den Aktor anzusteuern, um eine Einspritzung auszulösen und/oder zu beenden.

Bei einem Verfahren zum Einspritzen von Kraftstoff aus mindestens einem Kraftstoffinjektor, der einen elektrisch betätigbaren Aktor umfasst, an den eine Spannung angelegt wird, ist die vorab angegebene Aufgabe dadurch gelöst, dass die Spannung, die an dem Aktor anliegt, geglättet wird. Bei einer Einspritzung wird eine Druckwelle in das Kraftstoffeinspritzsystem eingebracht. Dadurch wird eine hochfrequente Druckschwingung ausgelöst, die den mit Druck beaufschlagten Aktor zu Schwingungen anregt, so dass die an dem Aktor anliegende Spannung schwankt. Die nachfolgende Einspritzung wird davon beeinflusst, in welchem Zustand sich der Aktor zu Beginn der Ansteuerung befindet. Somit beeinflusst die Druckwelle die Menge der nachfolgenden Einspritzung. Gemäß der Erfindung wird die Spannung, die an dem Aktor anliegt, geglättet, so dass die Mengenwelle ebenfalls geglättet oder gedämpft wird.

Erfindungsgemäß wird über elektrische Schwingkreise ein Dämpfungskreis realisiert, durch den die Amplituden von Mengenwellen in einem vorab beschriebenen Kraftstoffeinspritzsystem deutlich verringert werden können. Das erfindungsgemäße Verfahren ermöglicht es, die Amplituden der Mengenwellen zu reduzieren.

Weiter ist erfindungsgemäß vorgesehen, dass die spannungsglättende oder spannungsdämpfende elektrische Einrichtung zwischen zwei Ansteuerungen des Aktors gezielt zugeschaltet wird. Das liefert den Vorteil, dass die Glättung der Spannung nur zwischen zwei Ansteuerungen erfolgt.

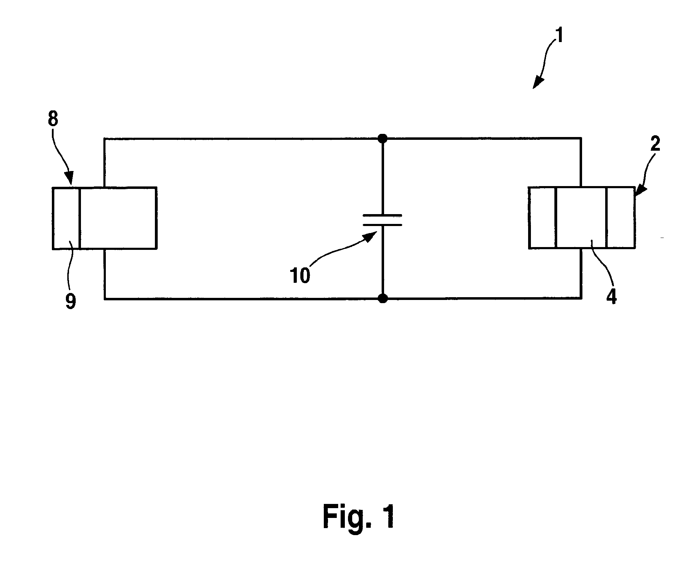

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

### Kurze Beschreibung der Zeichnung

Die beiliegende Figur zeigt eine schematische, stark vereinfachte Darstellung eines erfindungsgemäßen Kraftstoffeinspritzsystems.

### Beschreibung der Ausführungsbeispiele

In der beiliegenden Figur ist ein Kraftstoffeinspritzsystem 1 schematisch und stark vereinfacht dargestellt. Das Kraftstoffeinspritzsystem 1 umfasst einen Kraftstoffhochdruckspeicher beziehungsweise eine Kraftstoffhochdruckquelle, der beziehungsweise die auch als Common-Rail bezeichnet wird. An den Kraftstoffhochdruckspeicher sind mehrere Kraftstoffinjektoren angeschlossen, von denen in der beiliegenden Figur ein Kraftstoffinjektor 2 angedeutet ist. Die Kraftstoffinjektoren dienen dazu, Kraftstoff in den Brennraum einer Brennkraftmaschine einzuspritzen.

Der Kraftstoffinjektor 2 umfasst eine (nicht dargestellte) Düsennadel, die mindestens ein Einspritzloch in einem Injektorgehäuse gezielt freigibt, um Kraftstoff einzuspritzen. Die Öffnungsbewegung und/oder Schließbewegung der Düsennadel wird mit Hilfe eines Aktors 4 gesteuert. Bei dem Aktor 4 handelt es sich um einen Piezoaktor, der an eine Spannungsquelle angeschlossen ist. Wenn der Piezoaktor 4 bestromt wird, dann dehnt er sich aus. Analog wird in dem Piezoaktor eine Spannung erzeugt, wenn er zusammengedrückt wird. Ein Steuergerät 8 ist parallel zu dem Aktor 4 geschaltet und dient dazu, den Aktor 4 anzusteuern.

Durch eine Einspritzung wird in dem jeweiligen Aktor eine hochfrequente Druckschwingung ausgelöst. Diese führt dazu, dass der Piezoaktor 4, der mit Hochdruck beaufschlagt ist, angeregt wird und die an dem Piezoaktor 4 anliegende Spannung schwankt. Eine nachfolgende Einspritzung wird davon beeinflusst, in welchem Zustand sich der Aktor 4 zu Beginn der Ansteuerung durch das Steuergerät 8 befindet.

Eine spannungsglättende elektrische Einrichtung 10 ist parallel zu dem Aktor 4 und dem Steuergerät 8 geschaltet. Bei der spannungsglättenden elektrischen Einrichtung 10 handelt es sich zum Beispiel um ein LC-Siebglied, das eine Spule und einen Widerstand umfasst, oder um ein RC-Siebglied, das einen Widerstand und einen Kondensator umfasst.

Gemäß einem bevorzugten Ausführungsbeispiel wird als spannungsglättende elektrische Einrichtung 10 ein Kondensator verwendet. Der parallel geschaltete Kondensator dient dazu, die an dem Aktor 4 anliegende Spannung zu puffern. Dadurch kann die anliegende Spannung geglättet werden. In dem dargestellten Beispiel reduziert sich die Amplitude der Mengenwelle.

Gemäß einem weiteren Aspekt der Erfindung ist eine Schalteinrichtung 9 vorgesehen, die dazu dient, die vorab beschriebene Dämpfungsschaltung gezielt zubeziehungsweise abzuschalten. Das hat den Vorteil, dass die Glättung der Spannung nur zwischen zwei Ansteuerungen des Aktors 4 erfolgt. In dem dargestellten Ausführungsbeispiel ist die Schalteinrichtung 9 in das Steuergerät 8 integriert. Die der spannungsglättenden elektrischen Einrichtung 10 zugeordnete Schalteinrichtung 9 kann aber auch als separates Bauteil ausgeführt sein.

## Patentansprüche

1. Kraftstoffeinspritzsystem mit mindestens einem Kraftstoffinjektor (2), der einen elektrisch betätigbaren Aktor (4) umfasst, wobei eine spannungsglättende oder spannungsdämpfende elektrische Einrichtung (10) parallel zu dem Aktor (4) geschaltet ist, **dadurch gekennzeichnet, dass** eine Schalteinrichtung (9) mit der spannungsglättenden oder spannungsdämpfenden elektrischen Einrichtung (10) in Reihe geschaltet ist, wobei die Schalteinrichtung (9) die spannungsglättende oder spannungsdämpfende elektrische Einrichtung (10) gezielt zu- beziehungsweise abschaltet, so dass die Glättung der Spannung nur zwischen zwei Ansteuerungen durchgeführt werden kann.

2. Kraftstoffeinspritzsystem nach Anspruch 1, **dadurch gekennzeichnet, dass** die spannungsglättende oder spannungsdämpfende elektrische Einrichtung (10) einen Kondensator umfasst.

3. Kraftstoffeinspritzsystem nach Anspruch 1, **dadurch gekennzeichnet, dass** die spannungsglättende oder spannungsdämpfende elektrische Einrichtung (10) einen Kondensator, eine Spule und/oder einen Widerstand umfasst.

4. Kraftstoffeinspritzsystem nach einem der vorhergehenden Ansprüche, **dadurch gekennzeichnet, dass** ein Steuergerät (8) parallel zu dem Aktor (4) und der spannungsglättenden oder spannungsdämpfenden elektrischen Einrichtung (10) geschaltet ist.

5. Verfahren zum Einspritzen von Kraftstoff aus mindestens einem Kraftstoffinjektor (2), der einen elektrisch betätigbaren Aktor (4) umfasst, an den eine Spannung angelegt wird, wobei die Spannung, die an dem Aktor (4) anliegt, geglättet wird, und über elektrische Schwingkreise ein Dämpfungskreis realisiert wird, durch den die Amplituden von Mengenwellen in einem Kraftstoffeinspritzsystem (1) nach einem der Ansprüche 1 bis 4 deutlich verringert werden können, wobei die spannungsglättende oder spannungsdämpfende elektrische Einrichtung (10) zwischen zwei Ansteuerungen des Aktors (4) gezielt zugeschaltet wird.

## Claims

1. Fuel injection system having at least one fuel injector (2) which comprises an actuator (4) which can be electrically operated, wherein a voltage-smoothing or voltage-damping electrical device (10) is connected in parallel to the actuator (4), **characterized in that** a switching device (9) is connected in series with the voltage-smoothing or voltage-damping electrical device (10), wherein the switching device (9) switches on and switches off the voltage-smoothing or voltage-damping electrical device (10) in a targeted manner, so that smoothing of the voltage can be carried out only between two drive operations.

2. Fuel injection system according to Claim 1, **characterized in that** the voltage-smoothing or voltage-damping electrical device (10) comprises a capacitor.

3. Fuel injection system according to Claim 1, **characterized in that** the voltage-smoothing or voltage-damping electrical device (10) comprises a capacitor, a coil and/or a resistor.

4. Fuel injection system according to one of the preceding claims, **characterized in that** a controller (8) is connected in parallel to the actuator (4) and the voltage-smoothing or voltage-damping electrical device (10).

5. Method for injecting fuel from at least one fuel injector (2) which comprises an actuator (4) which can be electrically operated and to which a voltage is applied, wherein the voltage which is applied to the actuator (4) is smoothed, and a damping circuit is realized by means of electrical resonant circuits by which the amplitudes of bulk waves in a fuel injection system (1) according to one of Claims 1 to 4 can be considerably reduced, wherein the voltage-smoothing or voltage-damping electrical device (10) is switched on in a targeted manner between two drive operations of the actuator (4).

## Revendications

1. Système d'injection de carburant comprenant au moins un injecteur de carburant (2) qui comprend un actionneur (4) à commande électrique, un dispositif électrique (10) de lissage de tension ou amortisseur de tension étant monté parallèlement à l'actionneur (4), **caractérisé en ce qu'**un dispositif de commutation (9) est monté en série avec le dispositif électrique (10) de lissage de tension ou amortisseur de tension, le dispositif de commutation (9) connectant ou coupant de manière ciblée le dispositif électrique (10) de lissage de tension ou amortisseur de tension de telle sorte que le lissage de la tension ne soit effectué qu'entre deux commandes.

2. Système d'injection de carburant selon la revendication 1, **caractérisé en ce que** le dispositif électrique (10) de lissage de tension ou amortisseur de tension comprend un condensateur.

3. Système d'injection de carburant selon la revendication 1, **caractérisé en ce que** le dispositif électrique (10) de lissage de tension ou amortisseur de tension comprend un condensateur, une bobine et/ou une résistance.

4. Système d'injection de carburant selon l'une quelconque des revendications précédentes, **caractérisé en ce qu'**un appareil de commande (8) est monté parallèlement à l'actionneur (4) et au dispositif électrique (10) de lissage de tension ou amortisseur de tension.

5. Procédé d'injection de carburant à partir d'au moins un injecteur de carburant (2) qui comprend un actionneur (4) à commande électrique au niveau duquel une tension est appliquée, la tension appliquée au niveau de l'actionneur (4) étant lissée, et un circuit d'amortissement étant réalisé par le biais de circuits d'oscillation électriques, par le biais duquel circuit d'amortissement les amplitudes d'ondes quantitatives dans un système d'injection de carburant (1) selon l'une quelconque des revendications 1 à 4 peuvent être nettement réduites, le dispositif électrique (10) de lissage de tension ou amortisseur de tension étant connecté de manière ciblée entre deux commandes de l'actionneur (4).
